# EUROPEAN PATENT SPECIFICATION

(11) **EP 1 675 398 B1**
(45) Date of publication and mention of the grant of the patent: **23.09.2015**
(21) Application number: 04293081.8
(22) Date of filing: 22.12.2004
(51) Int. Cl.: H04N 21/433, H04N 21/4788

(54) **Interactive video communication system with chat**
Interaktives Video Kommunikationssystem mit Chat-Funktion
Système de communication de vidéo interactive avec chat

(43) Date of publication of application: 28.06.2006
(73) Proprietor: ALCATEL LUCENT, 92100 Boulogne-Billancourt (FR)
(72) Inventor: Baekeland, Rony Alfons Maria, 2000 Antwerpen (BE); Moons, Jan Lode Mia, 2220 Heist-op-den-Berg (BE)
(74) Representative: Narmon, Gisèle Marie Thérèse

(56) References cited:
- US-A1- 2002 144 273
- US-A1- 2003 041 331
- US-A1- 2003 122 966
- US-A1- 2004 073 947
- US-A1- 2004 255 336
- US-B1- 6 754 904
- ABREU J ET AL: "2BeOn: Interactive television supporting interpersonal communication" PROCEEDINGS OF THE EUROGRAPHICS WORKSHOP ON MULTIMEDIA, 2002, pages 199-208, XP002278091

## Description

The invention relates to an interactive video communication system, which interactive video communication system comprises
- a client system comprising a transmitter for transmitting a client signal to a further client system, a first receiver for receiving a video signal from a source and a second receiver for receiving a further client signal from the further client system, and a screen for displaying video information derived from the video signal and for displaying further client information derived from the further client signal,
- storing means for storing at least one signal, and
- detecting means for detecting commando's from a client.

The screen for example forms part of a television or a monitor, the transmitter and the receivers for example form part of a set top box or a personal computer, and the storing means for example form part of a video recorder or a personal computer or a personal video recorder.

A prior art interactive video communication system is known from US 2002/0144273, which discloses in its Figure 1 a client device (a client system) comprising a network interface (a transmitter) for transmitting an icon signal (a client signal) to an other client device (a further client system), a television receiver (a first receiver) for receiving a video signal from a source and the network interface (a second receiver) for receiving a further icon signal (a further client signal) from the other client device (the further client system), a display unit (a screen) for displaying video information derived from the video signal and for displaying further icon information (further client information) derived from the further icon signal, and storage modules (storing means) in the client device and in a network device for storing the video signal.

Sometimes, a client will be relatively busy with several relatively simultaneous actions. The client must watch the video information and must watch the further client information and must operate his/her client system. To reduce the busyness of the client, the known interactive video communication system offers the client the possibility to pause the video information for himself/herself as well as for the further client. So, the prior art interactive video communication system further comprises detecting means for detecting a pausing commando from the client.

The known interactive video communication system is disadvantageous, inter alia, owing to the fact that it is a relatively non-advanced system: in case one client decides to pause the video information while watching a live event, following video information will be missed by all clients, until the pause is over. This is because all clients are watching the same video signal. As soon as one client decides to pause the video signal, all clients will have to pause. Thereto, either the source is paused or the storing means in one client system take control and store the paused part of the video signal and send it to the other client systems for being displayed via the screens, or the storing means in all client systems are synchronized with each other and store the paused part of the video signal for being displayed via their screens later on.

It is an object of the invention, inter alia, to provide an interactive video communication system as defined above which interactive video communication system is relatively advanced.
The interactive video communication system according to the invention is characterized in that the storing means are coupled to the detecting means for, in response to a first commando, marking a part of the signal and storing further parts of this signal for said client systems, and, in response to a second commando, supplying the further parts of the signal to the screens of said client systems and storing yet further parts of the signal.

By coupling the storing means to the detecting means, in other words by allowing the detecting means to inform the storing means, in response to a first commando (a freezing commando), for example a part of the video signal is marked and further parts of this video signal are stored, and in response to a second commando (a continuing commando), for example the further parts of the video signal are supplied to the screen and yet further parts of the video signal are stored. This way, the interactive video communication system is provided with the option of watching video signals in a time shifted manner. As a result, while watching a live event, following video information will no longer be missed by the clients in case the video information has been freezed. This makes the interactive video communication system relatively advanced.

The coupling between the storing means and the detecting means may be a direct coupling without further means being in between or may be an indirect coupling with further means being in between. In fact, the storing means and the detecting means might be located in the same client system, in different client systems, in the same network, in different networks, and in systems and networks.

US 2004/0231003 discloses a method for informing network users of television programming viewed by other network users. US 5,936,661 discloses an interactive television game system. US 5,828,839 discloses a computer network chat room based on channel broadcast in real time. These prior art documents do not disclose an option for time shifting video signals.

The client signal might define an icon, which represents a positive reaction (smiling, laughing, applauding, cheering etc.) or a negative reaction (crying, turning around etc.). The client signal might define text, which represents a positive reaction (positive text, confirming text etc.) or a negative reaction (negative text, denying text, etc.). The video signal might comprise a video part and an audio part, which represents a positive reaction (football audience is standing up and making noise etc.) or a negative reaction (football audience keeps on sitting and does not make noise etc.).

An embodiment of the interactive video communication system according to the invention is characterized in that the detecting means are arranged to detect a third commando from a further client for confirming the first commando from the client.

The third commando allows the further client to decide too with respect to the freezing commando and makes the interactive video communication system more democratic.

An embodiment of the interactive video communication system according to the invention is characterized in that the detecting means are arranged to detect a fourth commando from a further client for confirming the second commando from the client.

The fourth commando allows the further client to decide too with respect to the continuing commando and makes the interactive video communication system more democratic.

An embodiment of the interactive video communication system according to the invention is characterized in that the storing means are arranged to store the client signals.

By storing the client signals, instead of storing the video signal or in addition to storing the video signal, these client signals can be easily reproduced at another time/date.

Further animation and all the communication that takes place between the clients and during a pause can also be stored by the storage means, for example separately from the video signal. This allows the possibility of a replay where the viewer can experience the recorded live event with a pause, while during this pause he/she will experience the communication and end-user animation brought to the screen by his buddies.

An embodiment of the interactive video communication system according to the invention is characterized in that the interactive video communication system further comprises
- a network system comprising a network receiver for receiving the client signal from the client system and for receiving the further client signal from the further client system, and a network transmitter for transmitting the client signal to the further client system and for transmitting the further client signal to the client system.

By providing the interactive video communication system with the network system, more services can be offered.

An embodiment of the interactive video communication system according to the invention is characterized in that the network system comprises the storing means and/or the detecting means.

By providing the network system with the storing means and/or the detecting means,
the client system is kept simple. The storing means may store for each client individually or for a group of clients. The detecting means may detect for each client individually or for a group of clients.

An embodiment of the interactive video communication system according to the invention is characterized in that the storing means comprise a recorder located in the client system.

By providing the client system with the storing means, the client does not need to go into the network for storing purposes.

An embodiment of the interactive video communication system according to the invention is characterized in that the detecting means comprise a detector located in the client system.

By providing the client system with the detecting means, the client does not need to go into the network for detecting purposes.

The invention also relates to a client system for use in the interactive video communication system as defined above, which client system according to the invention is characterized in that the client system further comprises the storing means and/or the detecting means.

The invention also relates to a network system for use in the interactive video communication system as defined above, which network system according to the invention is characterized in that the network system comprises a network receiver for receiving the client signal from the client system and for receiving the further client signal from the further client system, a network transmitter for transmitting the client signal to the further client system and for transmitting the further client signal to the client system, and the storing means and/or the detecting means.

The invention also relates to detecting means for use in the interactive video communication system as defined above, which detecting means are arranged to be coupled to the storing means.

The invention also relates to storing means for use in the interactive video communication system as defined above, which storing means are arranged to be coupled to the detecting means.

The invention also relates to an interactive video communication method, which interactive video communication method comprises the steps of
- at a client system, transmitting a client signal to a further client system, receiving a video signal from a source and receiving a further client signal from the further client system, and displaying video information derived from the video signal and displaying further information derived from the further client signal, and
- storing at least one signal,
- detecting commando's from a client,
characterized in that the step of storing is coupled to the step of detecting for, in response to a first commando, marking a part of the signal and storing further parts of this signal, and, in response to a second commando, supplying the further parts of the signal to the screen and storing yet further parts of the signal.

Embodiments of the network system according to the invention and of the client system according to the invention and of the detecting means according to the invention and of the storing means according to the invention and of the interactive video communication method according to the invention correspond with the embodiments of the interactive video communication system according to the invention.

The invention is based upon an insight, inter alia, that pausing a part of a broadcast results in missing other parts of the broadcast, and is based upon a basic idea, inter alia, that to be able to watch the broadcast in a time shifted manner, the freezing of the part of the broadcast should be combined with storing following parts of the broadcast.

The invention solves the problem, inter alia, to provide an interactive video communication system as defined above which interactive video communication system is relatively advanced, and is advantageous, inter alia, in that its clients no longer need to miss parts of a broadcast.

These and other aspects of the invention will be apparent from and elucidated with reference to the embodiments(s) described hereinafter.
Fig. 1 shows diagrammatically an interactive video communication system according to the invention comprising a client system according to the invention,
Fig. 2 shows diagrammatically an interactive video communication system according to the invention comprising a client system according to the invention and a network system according to the invention,
Fig. 3 shows diagrammatically an interactive video communication system according to the invention comprising a client system according to the invention and a network system according to the invention, and
Fig. 4 shows diagrammatically detecting means according to the invention and storing means according to the invention.

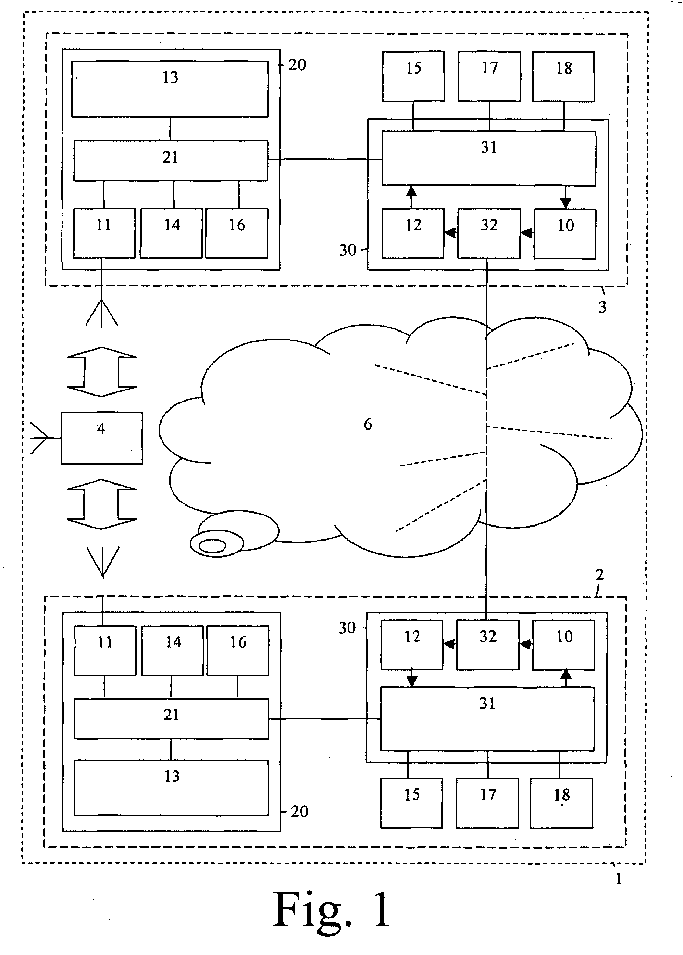

In Fig. 1 an interactive video communication system 1 according to the invention is diagrammatically shown. The interactive video communication system 1 comprises a client system 2 according to the invention and comprises a further client system 3 according to the invention. Each one of the client systems 2,3 comprises a video unit 20 and a network unit 30. The video unit 20 for example comprises a television or a monitor, and the network unit 30 for example comprises a set top box or a personal computer. The video unit 20 comprises a first receiver 11 for receiving a video signal from a source 4 such as a video station and for example further comprises first storing means 14 and first detecting means 16. The first receiver 11, the first storing means 14 and the first detecting means 16 are coupled to a processing and/or interfacing circuit 21, which is further coupled to a screen 13. The network unit 30 comprises a transmitter 10 for transmitting a client signal to the further client system 3. Thereto, the transmitter 10 is coupled to an interface 32, which is coupled via a network 6 to the further client system 3 and which is further coupled to a second receiver 12 for receiving a further client signal from the further client system 3 via the interface 32. The transmitter 10 and the second receiver 12 are further coupled to a processing and/or interfacing circuit 31, which is for example further coupled to second storing means 15 and to second detecting means 17 and to a unit 18. The processing and/or interfacing circuit 31 is further coupled to the processing and/or interfacing circuit 21.

In a prior art situation, such as disclosed in US 2002/0144273, the detecting means 16,17 are arranged to detect a pausing commando from a client. The client signal and the further client signal each comprise and/or define an icon signal which is displayed on the screen 13 together with the video signal, either by superimposing the client signal on the video signal or by allocating one part of the screen 13 to the client signal and an other part of the screen 13 to the video signal. This known interactive video communication system is disadvantageous, inter alia, owing to the fact that in case one client decides to pause the video information while watching a live event, following video information will be missed by all clients, until the pause is over. This can be derived as follows. All clients are watching the same video signal. As soon as one client decides to pause the video signal, all clients will have to pause. Thereto, either the source is paused or the storing means in one client system take control and store the paused part of the video signal and send it to the other client systems for being displayed via the screens, or the storing means in all client systems are synchronized with each other and store the paused part of the video signal for being displayed via their screens.

According to the invention, the interactive video communication system is made more advanced by introducing the detecting means 16 and/or 17 for detecting commando's from a client, which detecting means 16 and/or 17 are coupled to the storing means 14 and/or 15 for, in response to a first commando (a freezing commando), marking a part of the signal (as just stored or as to be stored) and storing further parts of this signal, and, in response to a second commando (a continuing commando), supplying the further parts of the signal to the screen and storing yet further parts of the signal. In other words, by allowing the detecting means 16 and/or 17 to inform the storing means 14 and/or 15, in response to a first commando (a freezing commando), for example a part of the video signal is marked and further parts of this video signal are stored, and in response to a second commando (a continuing commando), for example the further parts of the video signal are supplied to the screen 13 and yet further parts of the video signal are stored. This way, the interactive video communication system 1 is provided with the option of watching video signals in a time shifted manner. As a result, while watching a live event, following video information will no longer be missed by the clients in case the video information has been freezed. This makes the interactive video communication system 1 relatively advanced.

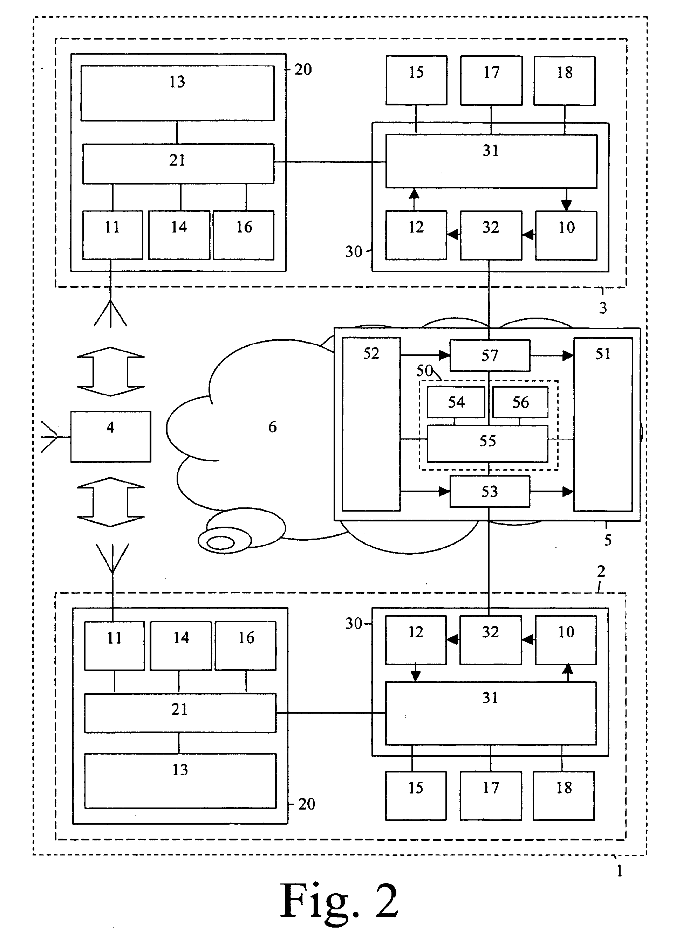

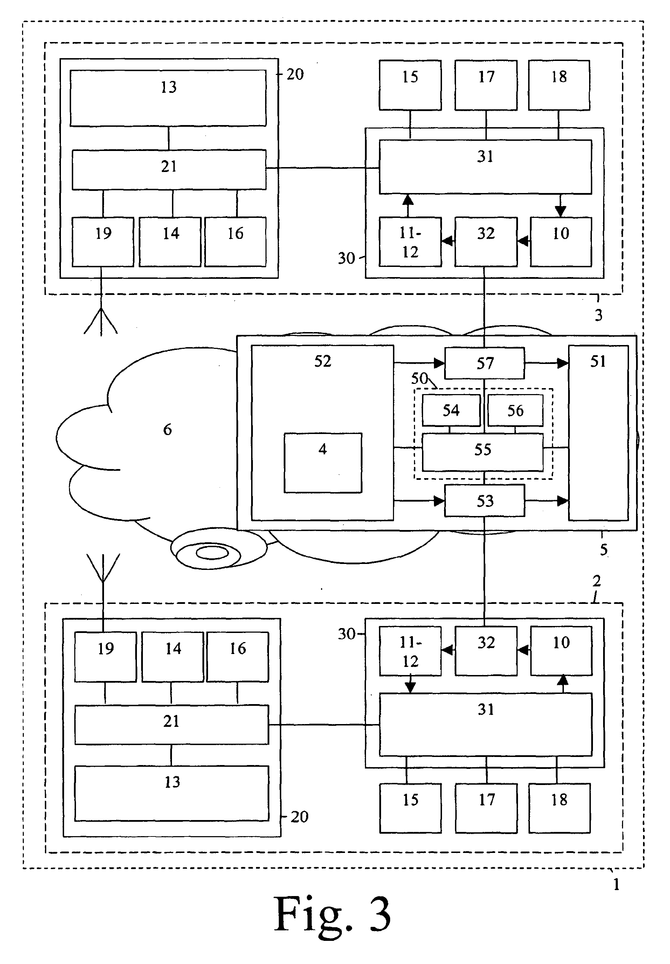

The coupling between the storing means 14 and/or 15 and the detecting means 16 and/or 17 may be a direct coupling without further means being in between or may be an indirect coupling with further means being in between. In fact, the storing means 14 and/or 15 and the detecting means 16 and/or 17 might be located in the same client system, in different client systems, in the same network, in different networks, and in systems and networks, see also Fig. 2 and 3.

The client signal might define an icon, which represents a positive reaction (smiling, laughing, applauding, cheering etc.) or a negative reaction (crying, turning around etc.). The client signal might define text, which represents a positive reaction (positive text, confirming text etc.) or a negative reaction (negative text, denying text, etc.). The video signal might comprise a video part and an audio part, which represents a positive reaction (football audience is standing up and making noise etc.) or a negative reaction (football audience keeps on sitting and does not make noise etc.).

The detecting means 16 and/or 17 might be arranged to detect a third commando from the further client system 3 for confirming the first commando from the client system 2. The third commando allows the further client to decide too with respect to the freezing commando and makes the interactive video communication system 1 more democratic.

The detecting means 16 and/or 17 are arranged to detect a fourth commando from the further client system 3 for confirming the second commando from the client system 2. The fourth commando allows the further client to decide too with respect to the continuing commando and makes the interactive video communication system more democratic.

The storing means 14 and/or 15 may be arranged to store the client signals. By storing the client signals, per client and/or for all clients and/or in combination with the video signal, these client signals can be easily reproduced at another time/date, and a client may for example decide to watch either the video signal or the combination of the video signal accompanied by the client signals or the client signals solely.

Further animation and all the communication that takes place between the clients and during a pause can also be stored by the storage means, for example separately from the video signal. This allows the possibility of a replay where the viewer can experience the recorded live event with a pause, while during this pause he/she will experience the communication and end-user animation brought to the screen by his buddies.

The storing means 14 and/or 15 may comprise a recorder located in the client system 2,3, to avoid that the client needs to go into the network 6 for storing purposes. The detecting means 16 and/or 17 may comprise a detector located in the client system 2,3 to avoid that the client needs to go into the network 6 for detecting purposes.

The storing means 14 and the detecting means 16 may form part of the video unit 20 or not, and the storing means 15 and the detecting means 17 may form part of the network unit 30 or not. Any combination of one or more of the storing means 14,15 and one or more of the detecting means 16,17 is possible.

In Fig. 2 an interactive video communication system 1 according to the invention is diagrammatically shown, which corresponds with the interactive video communication system 1 shown in Fig. 1, apart from the following. In Fig. 2, the interactive video communication system 1 according to the invention further comprises a network system 5 located in the network 6. This network system 5 comprises a network receiver 51 for receiving the client signal from the client system 2 and for receiving the further client signal from the further client system 3 and a network transmitter 52 for transmitting the client signal to the further client system 3 and for transmitting the further client signal to the client system 2. Thereto, the network receiver 51 and the network transmitter 52 are coupled via an interface 53 to the client system 2 and via an interface 57 to the further client system 3. The network system 5 further comprises a controlling unit 50 for controlling the network receiver 51 and the network transmitter 52 and the interfaces 53 and 57. This controlling unit 50 comprises a processing and/or interfacing circuit 55 and may further comprise third storing means 54 and/or third detecting means 56. The third storing means 54 may have a similar function as the first/second storing means 14/15, and the third detecting means 56 may have a similar function as the first/second detecting means 16/17. Any combination of one or more of the storing means 14,15,54 and one or more of the detecting means 16,17,56 is possible.

In Fig. 3 an interactive video communication system 1 according to the invention is diagrammatically shown, which corresponds with the interactive video communication system 1 shown in Fig. 2, apart from the following. In Fig. 3, the network system 5 further comprises the source 4, for example in the form of a part of the network transmitter 52. As a result, in the client systems 2,3, the second receiver 12 may comprise the first receiver 11, owing to the fact that both the video signal as well as the client signals arrive via the same connection. In the video units 20, the first receivers 11 are therefore replaced by the units 19.

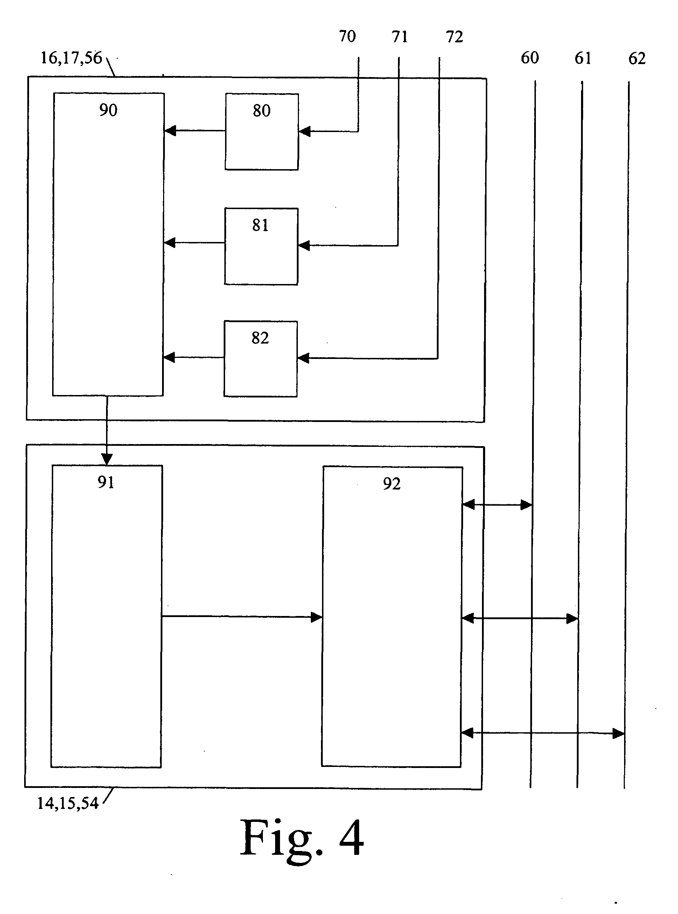

In Fig. 4 detecting means 16,17,56 according to the invention and storing means 14,15,54 according to the invention are shown diagrammatically. The detecting means 16,17,56 comprise a client commando detector 80 coupled to a bus 70 for detecting client commando's from a first client. The detecting means 16,17,56 further comprise a client commando detector 81 coupled to a bus 71 for detecting client commando's from a second client. The detecting means 16,17,56 further comprise a client commando detector 82 coupled to a bus 72 for detecting client commando's from a third client etc. The client commando detectors 80-82 are coupled to a controller 90, which is coupled to a controller 91 of the storing means 14,15,54. These storing means 14,15,54 further comprise a storage medium 92 coupled to the controller 91 and to buses 60-62, which buses 60-62 guide client signals, client parameters derived from clients and video signals. A client commando is a signal comprising a commando code defining the commando to be performed (freezing or continuing without excluding further commando's). In case of the client commando's using the same path to the commando detectors 80-82 or in case of for example only one commando detector being present, the signal will further comprise an identifier code defining the client. A client might generate his/her commando's via for example a remote control of the video unit 20 or the network unit 30, with the processing and/or interfacing circuit 21 or the processing and/or interfacing circuit 31 for example processing and/or interfacing the signals coming from this remote control and forwarding them to their destination. Alternatively, the storing means 14 and/or 15 and/or the detecting means 16 and/or 17 may have their own remote control.

Under control of the controller 91, the storage medium 92, in response to a first commando, marks a part of the video signal and stores further parts of this video signal, and, in response to a second commando, supplies the further parts of the video signal to the screen 13 and stores yet further parts of the video signal. The video signals may be stored solely and/or may be stored separately from a storage of the client signals and/or may be stored in combination with the client signals. Each detecting means 16,17,56 may comprise all detectors 80-82 or just some of them, in which case communication between the detecting means 16,17,56 may be necessary. Each storing means 14,15,54 may store all kinds of signals of just some of them, in which case communication between the storing means 14,15,54 may be necessary. The buses 60-62, 70-72 may alternatively form part of a reduced number of buses such as one bus for the buses 60-62 and one bus for the buses 70-72 or one bus for all. Other (kinds of) connections are not to be excluded. The controller 90 may have an arbiter function to overrule contradictory decisions with respect to different kinds of commando's (for example in case different commando's are in contradiction with each other) and/or to decide for non-unanimous decisions for majorities/minorities of clients (within a predefined time interval). Commando's from different clients may be weighted differently.

The screen 13 can be any kind of screen. Usually, the video signal and the further client signal from a further client will be displayed simultaneously to a client, possibly his/her own client signal may be displayed simultaneously as well. The network 6 can be any kind of network (internet, telephone, cable, satellite etc.). A further network may be involved, for example via the unit 18 being a further network interface. The storing means 14 (15) (54) and the detecting means 16 (17) (56) may be integrated into one means 14+16 (15+17) (54+56).

The expression "for" in for example "for transmitting", "for receiving", "for displaying", "for storing", "for detecting" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps of transmitting, receiving, storing and detecting do not exclude further steps, such as for example the steps described for the Figures.

## Claims

1. Interactive video communication system (1), which interactive video communication system (1) comprises
- a client system (2) comprising a transmitter (10) for transmitting a client signal to a further client system (3), a first receiver (11) for receiving a video signal from a source (4) and a second receiver (12) for receiving a further client signal from the further client system (3), and a screen (13) for displaying video information derived from a video signal and for displaying further client information derived from the further client signal,
- storing means (14,15,54) for storing at least one signal, and
- detecting means (16,17,56) for detecting commandos from a client,
**characterized in that** the storing means (14,15,54) are coupled to the detecting means (16,17,56) for, in response to a first commando, marking a part of the client signal and storing further parts of this signal for said client systems (2, 3) and, in response to a second commando, supplying the further parts of the the client signal to the screens of said client system (2, 3) and storing yet further parts of the client signal.

2. Interactive video communication system (1) as defined in claim 1, **characterized in that** the detecting means (16,17,56) are arranged to detect a third commando from a further client for confirming the first commando from the client.

3. Interactive video communication system (1) as defined in claim 1 or 2, **characterized in that** the detecting means (16,17,56) are arranged to detect a fourth commando from a further client for confirming the second commando from the client.

4. Interactive video communication system (1) as defined in claim 1, 2 or 3, **characterized in that** the storing means (14,15,54) are arranged to store the client signals.

5. Interactive video communication system (1) as defined in claim 1, 2, 3 or 4, **characterized in that** the interactive video communication system (1) further comprises
- a network system (5) comprising a network receiver (51) for receiving the client signal from the client system (2) and for receiving the further client signal from the further client system (3), and a network transmitter (52) for transmitting the client signal to the further client system (3) and for transmitting the further client signal to the client system (2).

6. Interactive video communication system (1) as defined in claim 5, **characterized in that** the network system (5) comprises the storing means (54) and/or the detecting means (56).

7. Interactive video communication system (1) as defined in claim 1, 2, 3, 4, 5 or 6, **characterized in that** the storing means (14,15) comprise a recorder located in the client system (2).

8. Interactive video communication system (1) as defined in claim 1, 2, 3, 4, 5, 6 or 7, **characterized in that** the detecting means (16,17) comprise a detector located in the client system (2).

9. Client system (2) for use in the interactive video communication system (1) as defined in claim 1, **characterized in that** the client system (2) further comprises the storing means (14,15) and/or the detecting means (16,17).

10. Network system (5) for use in the interactive video communication system (1) as defined in claim 1, **characterized in that** the network system (5) comprises a network receiver (51) for receiving the client signal from the client system (2) and for receiving the further client signal from the further client system (3), a network transmitter (52) for transmitting the client signal to the further client system (3) and for transmitting the further client signal to the client system (2), and the storing means (54) and/or the detecting means (56).

11. Detecting means (16,17,56) for use in the interactive video communication system (1) as defined in claim 1, which detecting means (16,17,56) are arranged to be coupled to the storing means (14,15,54).

12. Storing means (14,15,54) for use in the interactive video communication system (1) as defined in claim 1, which storing means (14,15,54) are arranged to be coupled to the detecting means (16,17,56).

13. Interactive video communication method, which interactive video communication method comprises the steps of
- at a client system (2), transmitting a client signal to a further client system (3), receiving a video signal from a source (4) and receiving a further client signal from the further client system (3), and displaying video information derived from the video signal and displaying further information derived from the further client signal, and
- storing at least one signal,
- detecting commando's from a client,
**characterized in that** the step of storing is coupled to the step of detecting for, in response to a first commando, marking a part of the signal and storing further parts of this client signal for said client systems (2, 3) and, in response to a second commando, supplying the further parts of the client signal to the screens of said client systems (2, 3) and storing yet further parts of the client signal.

## Patentansprüche

1. Interaktives Video-Kommunikationssystem (1), wobei das interaktive Video-Kommunikationssystem (1) Folgendes umfasst:
- ein Client-System (2), umfassend einen Sender (10) zum Senden eines Client-Signals an ein weiteres Client-System (3), einen ersten Empfänger (11) zum Empfangen eines Videosignals von einer Quelle (4) und einen zweiten Empfänger (12) zum Empfangen eines weiteren Client-Signals von dem weiteren Client-System (3) und einen Bildschirm (13) zum Anzeigen von Videodaten, die von einem Videosignal stammen, und zum Anzeigen weiterer Client-Daten, die von dem weiteren Client-Signal stammen,
- Speichermittel (14, 15, 54) zum Speichern von mindestens einem Signal, und
- Detektormittel (16, 17, 56) zum Erkennen von Befehlen von einem Client,
**dadurch gekennzeichnet, dass** die Speichermittel (14, 15, 54) an die Detektormittel (16, 17, 56) gekoppelt sind, um, als Antwort auf einen ersten Befehl, einen Teil des Client-Signals zu kennzeichnen und weitere Teile dieses Signals für die besagten Client-Systeme (2, 3) zu speichern, und als Antwort auf einen zweiten Befehl, die weiteren Teile des Signals an die Bildschirme der besagten Client-Systeme (2, 3) zu liefern und noch weitere Teile des Client-Signals zu speichern.

2. Interaktives Video-Kommunikationssystem (1) nach Anspruch 1, **dadurch gekennzeichnet, dass** die Detektormittel (16, 17, 56) angeordnet sind, um einen dritten Befehl von einem weiteren Client zum Bestätigen des ersten Befehls von dem Client zu erkennen.

3. Interaktives Video-Kommunikationssystem (1) nach Anspruch 1 oder 2, **dadurch gekennzeichnet, dass** die Detektormittel (16, 17, 56) angeordnet sind, um einen vierten Befehl von einem weiteren Client zum Bestätigen des zweiten Befehls von dem Client zu erkennen.

4. Interaktives Video-Kommunikationssystem (1) nach Anspruch 1, 2 oder 3, **dadurch gekennzeichnet, dass** die Speichermittel (14, 15, 54) angeordnet sind, um die Client-Signale zu speichern.

5. Interaktives Video-Kommunikationssystem (1) nach Anspruch 1, 2, 3 oder 4, **dadurch gekennzeichnet, dass** das interaktive Video-Kommunikationssystem (1) weiterhin Folgendes umfasst:
- ein Netzwerksystem (5), umfassend einen Netzwerkempfänger (51) zum Empfangen des Client-Signals von dem Client-System (2) und zum Empfangen des weiteren Client-Signals von dem weiteren Client-System (3) und einen Netzwerksender (52) zum Senden des Client-Signals an das weitere Client-System (3) und zum Senden des weiteren Client-Signals an das Client-System (2).

6. Interaktives Video-Kommunikationssystem (1) nach Anspruch 5, **dadurch gekennzeichnet, dass** das Netzwerksystem (5) die Speichermittel (54) und/oder die Detektormittel (56) umfasst.

7. Interaktives Video-Kommunikationssystem (1) nach Anspruch 1, 2, 3, 4, 5 oder 6, **dadurch gekennzeichnet, dass** die Speichermittel (14, 15) einen Rekorder umfassen, der sich im Client-System (2) befindet.

8. Interaktives Video-Kommunikationssystem (1) nach Anspruch 1, 2, 3, 4, 5, 6 oder 7, **dadurch gekennzeichnet, dass** die Detektormittel (16, 17) einen Detektor umfassen, der sich im Client-System (2) befindet.

9. Client-System (2) zur Verwendung im interaktiven Video-Kommunikationssystem (1) nach Anspruch 1, **dadurch gekennzeichnet, dass** das Client-System (2) weiterhin die Speichermittel (14, 15) und/oder die Detektormittel (16, 17) umfasst.

10. Netzwerksystem (5) zur Verwendung im interaktiven Video-Kommunikationssystem (1) nach Anspruch 1, **dadurch gekennzeichnet, dass** das Netzwerksystem (5) einen Netzwerkempfänger (51) zum Empfangen des Client-Signals von dem Client-System (2) und zum Empfangen des weiteren Client-Signals von dem weiteren Client-System (3), einen Netzwerksender (52) zum Senden des Client-Signals an das weitere Client-System (3) und zum Senden des weiteren Client-Signals an das Client-System (2) und die Speichermittel (54) und/oder die Detektormittel (56) umfasst.

11. Detektormittel (16, 17, 56) zur Verwendung im interaktiven Video-Kommunikationssystem (1) nach Anspruch 1, wobei die Detektormittel (16, 17, 56) angeordnet sind, um an die Speichermittel (14, 15, 54) gekoppelt zu werden.

12. Speichermittel (14, 15, 54) zur Verwendung im interaktiven Video-Kommunikationssystem (1) nach Anspruch 1, wobei die Speichermittel (14, 15, 54) angeordnet sind, um an die Detektormittel (16, 17, 56) gekoppelt zu werden.

13. Verfahren für eine interaktive Videokommunikation, wobei das Verfahren für die interaktive Videokommunikation folgende Schritte umfasst:
- an einem Client-System (2) das Senden eines Client-Signals an ein weiteres Client-System (3), das Empfangen eines Videosignals von einer Quelle (4) und das Empfangen eines weiteren Client-Signals von dem weiteren Client-System (3) und das Anzeigen von Videodaten, die von dem Videosignal stammen, und das Anzeigen weiterer Daten, die von dem weiteren Client-Signal stammen, und
- Speichern von mindestens einem Signal,
- Erkennen von Befehlen von einem Client,
**dadurch gekennzeichnet, dass** der Schritt des Speicherns an den Schritt des Erkennens gekoppelt ist, um, als Antwort auf einen ersten Befehl, einen Teil des Signals zu kennzeichnen und weitere Teile dieses Client-Signals für die besagten Client-Systeme (2, 3) zu speichern, und als Antwort auf einen zweiten Befehl, die weiteren Teile des Client-Signals an die Bildschirme der besagten Client-Systeme (2, 3) zu liefern und noch weitere Teile des Client-Signals zu speichern.

## Revendications

1. Système de communication vidéo interactive (1), ledit système de communication vidéo interactive (1) comprenant
- un système client (2) comprenant un émetteur (10) pour transmettre un signal client à un autre système client (3), un premier récepteur (11) pour recevoir un signal vidéo provenant d'une source (4) et un deuxième récepteur (12) pour recevoir un autre signal client provenant de l'autre système client (3), et un écran (13) pour afficher des informations vidéo dérivées d'un signal vidéo et pour afficher d'autres informations client dérivées de l'autre signal client,
- des moyens de stockage (14, 15, 54) pour stocker au moins un signal, et
- des moyens de détection (16, 17, 56) pour détecter des commandes provenant d'un client, **caractérisé en ce que** les moyens de stockage (14, 15, 54) sont couplés aux moyens de détection (16, 17, 56) pour, en réponse à une première commande, marquer une partie du signal client et stocker d'autres parties de ce signal pour lesdits systèmes client (2, 3), et, en réponse à une deuxième commande, fournir les autres parties du signal client aux écrans desdits systèmes client (2, 3) et stocker encore d'autres parties du signal client.

2. Système de communication vidéo interactive (1) selon la revendication 1, **caractérisé en ce que** les moyens de détection (16, 17, 56) sont conçus pour détecter une troisième commande provenant d'un autre client pour confirmer la première commande provenant du client.

3. Système de communication vidéo interactive (1) selon la revendication 1 ou 2, **caractérisé en ce que** les moyens de détection (16, 17, 56) sont conçus pour détecter une quatrième commande provenant d'un autre client pour confirmer la deuxième commande provenant du client.

4. Système de communication vidéo interactive (1) selon la revendication 1, 2 ou 3, **caractérisé en ce que** les moyens de stockage (14, 15, 54) sont conçus pour stocker les signaux client.

5. Système de communication vidéo interactive (1) selon la revendication 1, 2, 3 ou 4, **caractérisé en ce que** le système de communication vidéo interactive (1) comprend en outre
- un système de réseau (5) comprenant un récepteur de réseau (51) pour recevoir le signal client provenant du système client (2) et pour recevoir l'autre signal client provenant de l'autre système client (3), et un émetteur de réseau (52) pour transmettre le signal client à l'autre système client (3) et pour transmettre l'autre signal client au système client (2).

6. Système de communication vidéo interactive (1) selon la revendication 5, **caractérisé en ce que** le système de réseau (5) comprend les moyens de stockage (54) et/ou les moyens de détection (56).

7. Système de communication vidéo interactive (1) selon la revendication 1, 2, 3, 4, 5 ou 6, **caractérisé en ce que** les moyens de stockage (14, 15) comprennent un enregistreur situé dans le système client (2).

8. Système de communication vidéo interactive (1) selon la revendication 1, 2, 3, 4, 5, 6 ou 7, **caractérisé en ce que** les moyens de détection (16, 17) comprennent un détecteur situé dans le système client (2).

9. Système client (2) destiné à être utilisé dans le système de communication vidéo interactive (1) selon la revendication 1, **caractérisé en ce que** le système client (2) comprend en outre les moyens de stockage (14, 15) et/ou les moyens de détection (16, 17).

10. Système de réseau (5) destiné à être utilisé dans le système de communication vidéo interactive (1) selon la revendication 1, **caractérisé en ce que** le système de réseau (5) comprend un récepteur de réseau (51) pour recevoir le signal client provenant du système client (2) et pour recevoir l'autre signal client provenant de l'autre système client (3), un émetteur de réseau (52) pour transmettre le signal client à l'autre système client (3) et pour transmettre l'autre signal client au système client (2), et les moyens de stockage (54) et/ou les moyens de détection (56).

11. Moyens de détection (16, 17, 56) destinés à être utilisés dans le système de communication vidéo interactive (1) selon la revendication 1, lesdits moyens de détection (16, 17, 56) étant conçus pour être couplés aux moyens de stockage (14, 15, 54).

12. Moyens de stockage (14, 15, 54) destinés à être utilisés dans le système de communication vidéo interactive (1) selon la revendication 1, lesdits moyens de stockage (14, 15, 54) étant conçus pour être couplés aux moyens de détection (16, 17, 56).

13. Procédé de communication vidéo interactive, ledit procédé de communication vidéo interactive comprenant les étapes suivantes
- au niveau d'un système client (2), transmettre un signal client à un autre système client (3), recevoir un signal vidéo provenant d'une source (4) et recevoir un autre signal client provenant de l'autre système client (3), et afficher des informations vidéo dérivées du signal vidéo et afficher d'autres informations dérivées de l'autre signal client, et
- stocker au moins un signal,
- détecter des commandes provenant d'un client,
**caractérisé en ce que** l'étape de stockage est couplée à l'étape de détection pour, en réponse à une première commande, marquer une partie du signal et stocker d'autres parties de ce signal client pour ledit système client (2, 3) et, en réponse à une deuxième commande, fournir les autres parties du signal client aux écrans desdits systèmes client (2, 3) et stocker encore d'autres parties du signal client.
